(19) Europäisches Patentamt
European Patent Office
Office européen des brevets

(11) **EP 4 468 647 A1**

(12) **EUROPEAN PATENT APPLICATION**
published in accordance with Art. 153(4) EPC

(43) Date of publication:
**27.11.2024  Bulletin 2024/48**

(21) Application number: **22921159.4**

(22) Date of filing: **21.01.2022**

(51) International Patent Classification (IPC):
**H04L 7/04** (2006.01)    **H04L 7/00** (2006.01)
**H04B 10/071** (2013.01)

(52) Cooperative Patent Classification (CPC):
**H04B 10/071; H04L 7/00; H04L 7/04**

(86) International application number:
**PCT/CN2022/073276**

(87) International publication number:
**WO 2023/137718 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• ZUO, Zhisong
  Dongguan, Guangdong 523860 (CN)
• CUI, Shengjiang
  Dongguan, Guangdong 523860 (CN)

(74) Representative: **RGTH
Patentanwälte PartGmbB
Neuer Wall 10
20354 Hamburg (DE)**

(54) **SYNCHRONIZATION CONTROL METHOD, TERMINAL DEVICE, NETWORK DEVICE, CHIP, AND STORAGE MEDIUM**

(57)    The present application relates to a synchronization control method, a terminal device, a network device, a chip, a computer-readable storage medium, a computer program product, a computer program, and a communication system. A method includes: receiving, by a terminal device, a first downlink signal from a network device; performing, by the terminal device, modulation on a reflected signal of the first downlink signal to obtain a first uplink signal; and sending, by the terminal device, the first uplink signal to the network device, where the first uplink signal carries synchronization information through the modulation of the terminal device, and the synchronization information is used for obtaining a timing error and/or frequency error of the terminal device. Timing accuracy may be improved by utilizing embodiments of the present application.

S110

Receive, by a terminal device, a first downlink signal from a network device

S120

Perform, by the terminal device, modulation on a reflected signal of the first downlink signal to obtain a first uplink signal; and sending, by the terminal device, the first uplink signal to the network device, where the first uplink signal carries synchronization information through the modulation of the terminal device, and the synchronization information is used for obtaining a timing error and/or frequency error of the terminal device

FIG. 7

**Description**

## TECHNICAL FIELD

The present application relates to the field of communications, and in particular, to synchronization control methods, terminal devices, network devices, a chip, a computer-readable storage medium, a computer program product, a computer program and a communication system.

## BACKGROUND

Timing accuracy of communication devices directly affects communication performance. However, some terminal devices (such as zero-power terminals) have simpler clock circuits due to cost and power consumption, resulting in relatively large timing errors, frequency errors, or the like. Consideration needs to be given to how to improve timing accuracy.

## SUMMARY

In view of the above, embodiments of the present application provide synchronization control methods, terminal devices, network devices, a chip, a computer-readable storage medium, a computer program product, a computer program and a communication system, which may be used to solve a problem regarding timing adjustments.

Embodiments of the present application provide a synchronization control method including:

receiving, by a terminal device, a first downlink signal from a network device;
performing, by the terminal device, modulation on a reflected signal of the first downlink signal to obtain a first uplink signal; and
sending, by the terminal device, the first uplink signal to the network device, where the first uplink signal carries synchronization information through the modulation of the terminal device, and the synchronization information is used for obtaining a timing error and/or frequency error of the terminal device.

Embodiments of the present application provide a synchronization control method including:

sending, by a network device, a first downlink signal to a terminal device, where a reflected signal of the first downlink signal is used for being modulated to obtain a first uplink signal;
receiving, by the network device, the first uplink signal from the terminal device, where the first uplink signal carries synchronization information through the modulation of the terminal device, and the synchronization information is used for obtaining a timing error and/or frequency error of the terminal device.

Embodiments of the present application further provide a terminal device including:

a first receiving module configured to receive a first downlink signal from a network device;
a first processing module configured to perform modulation on a reflected signal of the first downlink signal to obtain a first uplink signal; and
a first sending module configured to send the first uplink signal to the network device, where the first uplink signal carries synchronization information through the modulation of the terminal device, and the synchronization information is used for obtaining a timing error and/or frequency error of the terminal device.

Embodiments of the present application further provide a network device including:

a second sending module configured to send a first downlink signal to a terminal device, where a reflected signal of the first downlink signal is used for being modulated to obtain a first uplink signal;
a second receiving module configured to receive the first uplink signal from the terminal device, where the first uplink signal carries synchronization information through the modulation of the terminal device, and the synchronization information is used for obtaining a timing error and/or frequency error of the terminal device.

Embodiments of the present application further provide a terminal device, and the terminal device includes a processor and a memory. The memory is configured to store a computer program, and the processor is configured to call and run the computer program stored in the memory to perform the synchronization control method provided by any embodiment of the present application.

Embodiments of the present application further provide a network device, and the network device includes a processor and a memory. The memory is configured to store a computer program, and the processor is configured to call and run the computer program stored in the memory to perform the synchronization control method provided by any embodiment of the present application.

Embodiments of the present application further provide a chip, and the chip includes a processor configured to call and run a computer program from a memory to cause a device equipped with the chip to perform the synchronization control method provided by any embodiment of the present application.

Embodiments of the present application further provide a computer-readable storage medium, and the computer-readable storage medium configured to store a computer program. The computer program causes a computer to perform the synchronization control method provided by any embodiment of the present application.

Embodiments of the present application further provide a computer program product, and the computer program product includes computer program instructions. The computer program instructions cause a computer to perform the synchronization control method provided by any embodiment of the present application.

Embodiments of the present application further provide a computer program, and the computer program causes a computer to perform the synchronization control method provided by any embodiment of the present application.

Embodiments of the present application further provide a communication system, and the communication system includes a terminal device and a network device, which are configured to perform the synchronization control method provided by any embodiment of the present application.

According to technical solutions in the embodiments of the present application, the terminal device performs uplink communication based on back scattering, where the terminal device modulates a reflected signal of a downlink signal sent by the network device to obtain an uplink signal carrying synchronization information, and the network device may obtain a timing error and/or frequency error of the terminal device based on the synchronization information. Therefore, the network device may correct or assist the terminal device in correcting the timing error and/or frequency error to improve timing accuracy, thereby ensuring that the terminal device and the network device transceive information with accurate timing.

## BRIEF DESCRIPTION OF THE DRAWINGS

FIG. 1 is a schematic diagram of an architecture of a communication system of embodiments of the present application.

FIG. 2 is a schematic diagram of zero-power communication of embodiments of the present application.

FIG. 3 is a schematic diagram of back scattering communication of embodiments of the present application.

FIG. 4 is a schematic diagram of power harvesting of embodiments of the present application.

FIG. 5 is a circuit schematic diagram of resistive load modulation of embodiments of the present application.

FIG. 6A is a first schematic diagram of an error of an RC oscillator of embodiments of the present application.

FIG. 6B is a second schematic diagram of an error of an RC oscillator of embodiments of the present application.

FIG. 7 is a schematic flowchart of a synchronization control method, in accordance with an embodiment of the present application.

FIG. 8 is a schematic flowchart of a synchronization control method, in accordance with another embodiment of the present application.

FIG. 9 is a schematic diagram of a scenario of a synchronization control method of embodiments of the present application.

FIG. 10 is a schematic diagram of a synchronization control method in example application 1 of the present application.

FIG. 11 is a schematic diagram of modulation using a synchronization signal sequence in an example application of the present application.

FIG. 12 is a schematic diagram of a synchronization control method of example application 2 of the present application.

FIG. 13 is a schematic structural block diagram of a terminal device of an embodiment of the present application.

FIG. 14 is a schematic structural block diagram of a terminal device of another embodiment of the present application.

FIG. 15 is a schematic structural block diagram of a network device of an embodiment of the present application.

FIG. 16 is a schematic structural block diagram of a network device of another embodiment of the present application.

FIG. 17 is a schematic block diagram of a communication device of embodiments of the present application.

FIG. 18 is a schematic block diagram of a chip of embodiments of the present application.

FIG. 19 is a schematic block diagram of a communication system of embodiments of the present application.

## DETAILED DESCRIPTION

Technical solutions in the embodiments of the present application will be described below with reference to the accompanying drawings in the embodiments of the present application.

The technical solutions in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (Wi-Fi), a 5th-generation (5G) system, or other communication systems.

Generally speaking, traditional communication systems support a limited number of connections which are easy to be implemented. However, with development of communication technologies, mobile communication systems will support not only traditional communications, but also, for example, device to device (D2D) communication, machine to machine (M2M) communication, machine type communication (MTC), vehicle to vehicle (V2V) communication, vehicle to everything (V2X) communication, or the like. The embodiments of the present application may also be applied to these communication systems.

Optionally, a communication system in the embodiments of the present application may be applied to a carrier aggregation (CA) scenario, a dual connectivity (DC) scenario, or a standalone (SA) networking scenario.

The embodiments of the present application describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (such as an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device for communicating with a mobile device, such as an access network device. The network device may be an access point (AP) in WLAN, a base station (Base Transceiver Station, BTS) in GSM or CDMA, a base station (NodeB, NB) in WCDMA, an evolved base station (Evolutional NodeB, eNB or eNodeB) in LTE, a relay station or access point, an in-vehicle device, a wearable device, a network device (gNB) in an NR network, or a network device in a future evolved PLMN network, or the like.

The network device may also be a core network device, such as a mobility management entity (MME), an access and mobility management function (AMF) entity, or other network entities, which is not limited in the embodiments of the present application.

By way of example and not limitation, in the embodiments of the present application, the network device may have a mobile characteristic. For example, the network device may be mobile equipment. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells have characteristics of small coverage and low transmission power, and are suitable for providing high-speed data transmission services.

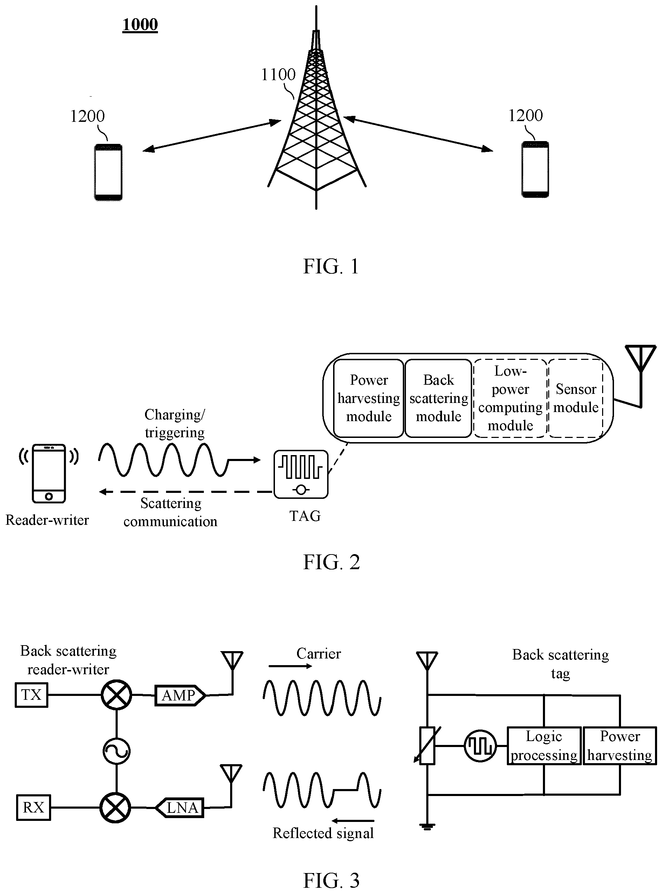

FIG. 1 schematically shows a wireless access system 1000 including a network device 1100 and two terminal devices 1200. Optionally, the wireless communication system 1000 may include multiple network devices 1100, and coverage area of each network device 110 may be provided therein with other number of terminal devices.

It should be understood that a device in a network/system having a communication function in the embodiments of the present application may be referred to as a communication device. In an example of the communication system shown in FIG. 1, the communication devices may include the network device and the terminal devices, which have the communication function. The network device and the terminal devices may be specific devices in the embodiments of the present application.

It should be understood that terms "system" and "network" are often used interchangeably herein. The term "and/or" herein is used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" described in the embodiments of the present application may mean a relationship of direct or indirect correspondence between the two, or a relationship of association between the two, or a relationship of indicating and being indicated, or configuring and being configured, or the like.

To facilitate understanding of the technical solutions in the embodiments of the present application, related technologies of the present application are described in below. The following related technologies, as optional solutions, may be arbitrarily combined with the technical solutions in the embodiments of the present application, and those combined solutions all belong to protection scope of the embodiments of the present application.

I. Communication based on zero-power devices

In recent years, zero-power devices have become more widely used. A typical zero-power device is a radio frequency identification (RFID) device, which uses radio coupling between a receiving terminal and a transmitting terminal to achieve contactless automatic transmission and identification of tag information. This includes inductive coupling at short distances and electromagnetic coupling at long distances. RFID tag is also called "radio frequency tag" or "electronic tag". According to the difference in power supply methods, electronic tags may be categorized into three types of tags, i.e., active electronic tags, passive electronic tags and semi-passive electronic tags. An active electronic tag, also called an electronic tag with active mode, refers to an electronic tag with built-in battery to provide power for working. Unlike passive radio frequency activation, this tag may actively send information in a set frequency band. The passive electronic tags, also called an electronic tag with passive mode, does not support built-in battery. When a passive electronic tag approaches a reader-writer, an antenna of the electronic tag is in a near field formed by radiation of an antenna of the reader-writer and generates an induced current through electromagnetic induction, and the induced current drives a chip circuit in the electronic tag. The chip circuit sends identification information stored in the tag to the reader-writer through the antenna of the electronic tag. The semi-active electronic tag inherits advantages of the passive electronic tag, such as small size, light weight, low price and long service life. When there is no reader-writer access, a built-in battery of the semi-active electronic tag only supplies power for a small number of circuits in a chip. Only when the reader-writer accesses, the built-in battery supplies power to an RFID chip to increase reading and writing distances of the tag and improve reliability of communication.

The most basic RFID system using wireless communication technology consists of two parts: an electronic tag (TAG) and a reader-writer (Reader/Writer). Herein, the electronic tag is composed of a coupling component and a chip. Each electronic tag has a unique electronic number and is placed on a target to be measured to achieve a purpose of marking the target object. The reader-writer may not only read information on the electronic tag, but also write information into the electronic tag, and provide power required for communication for the electronic tag. After the passive electronic tag or the electronic tag with passive mode enters an electromagnetic field generated in space, it receives a radio frequency signal sent by the reader-writer, and uses power obtained from the electromagnetic field to transmit information stored in the electronic tag. The reader-writer reads the information and decodes it to identify the electronic tag.

RFID is a typical zero-power communication. Key technologies of such zero-power communication include power harvesting, back scattering communication and low-power computing. As shown in FIG. 2, a typical zero-power communication system includes a reader-writer and a zero-power terminal. The reader-writer transmits radio waves for providing power to the zero-power terminal. A power harvesting module installed in the zero-power terminal may harvest power carried by radio waves in space (radio waves transmitted by the reader-writer as shown in FIG. 2), to drive a low-power computing module of the zero-power terminal and realize back scattering communication. After the zero-power terminal obtains the power, it may receive a control command from the reader-writer and send data to the reader-writer based on the control signaling and back scattering. The sent data may come from data stored in the zero-power terminal itself (such as an identification identifier or pre-written information, for example, a production date, a brand, a manufacturer of a product). The zero-power terminal may also be provided with various sensors, so as to report data collected by the various sensors based on a zero-power mechanism.

Communication based on a zero-power device, referred to as zero-power communication, includes following key technologies.

1. Back scattering communication (Back Scattering)

As shown in FIG. 3, a zero-power device, such as a back scattering tag shown in FIG. 3, receives a carrier signal sent by a back scattering reader-writer, and harvests power through an RF power harvesting module, which is supplied to a low-power processing module (a logic processing module shown in FIG. 3) to modulate an incoming signal and perform back scattering.

Main characteristics are as follows:

(1) the terminal does not actively transmit a signal, but realizes back scattering communication by modulating an incoming signal;
(2) the terminal does not rely on a traditional active amplifier transmitter, but uses a low-power computing unit, thereby greatly reducing hardware complexity; and
(3) battery-free communication may be achieved in combination with power harvesting.

2. Power harvesting (RF Power Harvesting)

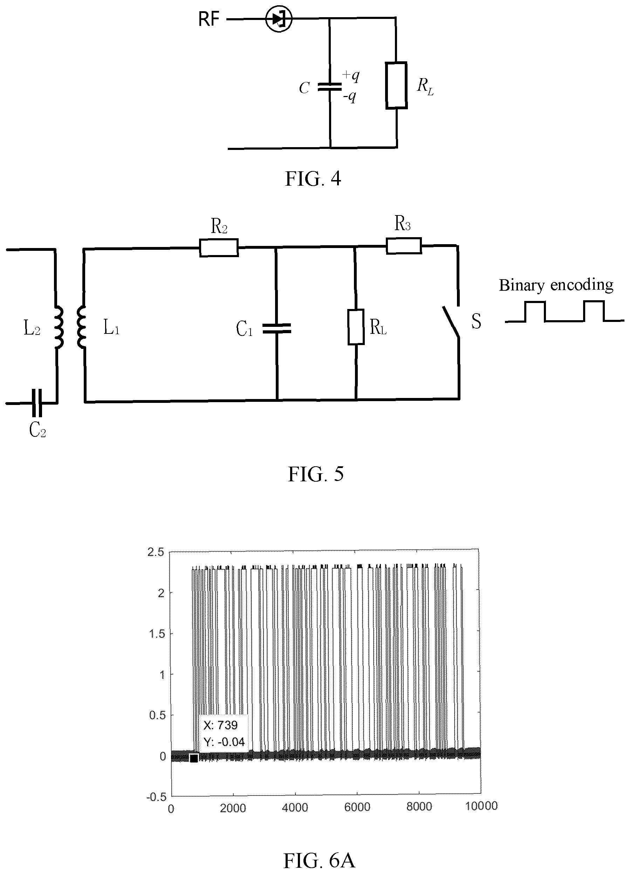

As shown in FIG. 4, an RF module is utilized to harvest power of electromagnetic waves in space through electromagnetic induction, which may achieve drive of a load circuit (low-power computing, sensor, etc.), thereby achieving battery-free.

3. Load modulation

Load modulation is a method often used by an electronic tag to transmit data to a reader-writer. The load modulation completes a modulation process by adjusting electrical parameters of an oscillation circuit of the electronic tag according to rhythms of a data stream to change a size and phase of impedance of the electronic tag accordingly. There are two main types of load modulation technologies, which are resistive load modulation and capacitive load modulation. In the resistive load modulation, a resistor is connected in parallel with a load, which is called a load modulation resistor. The resistor is turned on and off according to a clock of the data stream, and the on-off of a switch S is controlled by binary data encoding. The circuit schematic diagram of the resistive load modulation is shown in FIG. 5.

In the capacitive load modulation, a capacitor is connected in parallel with a load, replacing the load modulation resistor controlled by the binary data encoding shown in FIG. 5.

4. Coding

Data transmitted by an electronic tag may be represented by binary "1" and "0" by using codes with different forms. A wireless radio frequency identification system usually use one of following encoding methods: non-return-to-zero (NRZ) encoding, Manchester encoding, unipolar return-to-zero (Unipolar RZ) encoding, differential bi-phase (DBP) encoding, Miller encoding, and differential encoding. In layman's terms, different pulse signals are used to represent 0 and 1.

II. Cellular passive Internet of Things

With the increase of 5G industry applications, there are more and more types of connected objects and application scenarios in the Internet of Things, and there will be higher requirements for price and power consumption of communication terminals. Application of a passive Internet of Things device with battery-free and low-cost has become a key technology for cellular Internet of Things, to enrich types and number of terminals connected to a 5G network and truly realize the Internet of everything. Herein, the passive Internet of Things device may be used in the cellular Internet of Things based on existing zero-power devices.

III. Subcarrier modulation

Subcarrier modulation means that carrier 1 is first modulated with a signal, and then another carrier 2 with a higher frequency is modulated based on the modulation result. The subcarrier modulation is a modulation scheme often used in an RFID system.

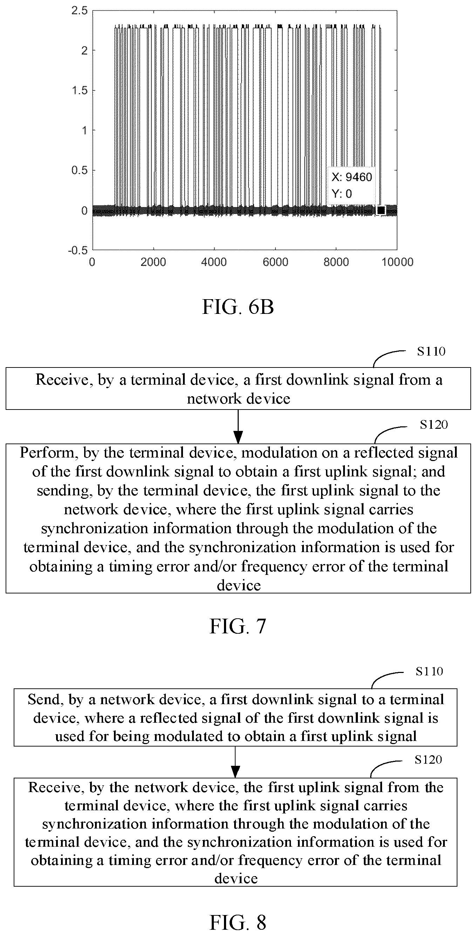

The zero-power terminal in the above-mentioned related technologies needs to be provided with a power supply signal through a network device (such as a base station, or an RFID reader-writer) or other sources, so that the zero-power terminal may obtain power to drive a circuit. A clock is also provided in the circuit of the zero-power terminal. For reasons of cost and power consumption, a zero-power clock circuit portion often uses a simplified circuit of an RC oscillator. Timing, frequency, phase and other errors of such circuit are relatively large. FIGS. 6A and 6B are schematic diagrams showing a timing signal error of a zero-power consumption terminal based on actual tests. Specific data are as follows.

| Sampling period | 2e-8 (s) |
|---|---|
| Number of bits | 176 |
| Sampling time | (9460-739) * 2e-8 = 1.7442e-4 |
| Time per bit | 1.7442e-4 / 176 = 9.9102e-7 (s) |
| Theoretical time per bit | 10 $\mu$s |
| Error | 8.98‰ |

It can be seen that the error of the RC oscillator is about 0.89%.

Although a zero-power device using a microcontroller may further correct the error, it is still much higher than an error of a crystal oscillator circuit.

In order to solve the above problem, the present application proposes to further control an error of a reflected signal by a network. Otherwise, a timing error and its accumulated value may cause a system to fail to communicate normally. In addition, since frequency of a signal reflected by the terminal is different from frequency of continuous waves for power supply, there is a lack of reference signal calibration.

Solutions provided in the embodiments of the present application is mainly used to solve at least one of above problems.

In order to understand characteristics and technical contents of the embodiments of the present invention in more detailed, implementation of the embodiments of the present invention is described in detail below in conjunction with the accompanying drawings. The accompanying drawings are for reference only and are not intended to limit the embodiments of the present invention.

FIG. 7 is a schematic flowchart of a synchronization control method, in accordance with an embodiment of the present application. The method may optionally be applied to the system shown in FIG. 1, but it is not limited thereto. The method includes:

S 110, receiving, by a terminal device, a first downlink signal from a network device; and

S 120, performing, by the terminal device, modulation on a reflected signal of the first downlink signal to obtain a first uplink signal; and sending, by the terminal device, the first uplink signal to the network device, where the first uplink signal carries synchronization information through the modulation of the terminal device, and the synchronization information is used for obtaining a timing error and/or frequency error of the terminal device.

Correspondingly to the method, the network device sends the first downlink signal and receives the first uplink signal. Specifically, FIG. 8 is a schematic flowchart showing a synchronization control method, in accordance with another embodiment of the present application. The method may also optionally be applied to the system shown in FIG. 1, but it is not limited thereto. The method includes:

S210, sending, by a network device, a first downlink signal to a terminal device, where a reflected signal of the first downlink signal is used for being modulated to obtain a first uplink signal; and

S220, receiving, by the network device, the first uplink signal from the terminal device, where the first uplink signal carries synchronization information through the modulation of the terminal device, and the synchronization information is used for obtaining a timing error and/or frequency error of the terminal device.

According to above methods, the terminal device performs uplink communication based on back scattering, where modulation is performed on a reflected signal of a downlink signal sent by the network device to obtain an uplink signal carrying synchronization information; and the network device may obtain a timing error and/or frequency error of the terminal device based on the synchronization information. Therefore, the network device may correct or assist the terminal device in correcting the timing error and/or frequency error, to improve timing accuracy and ensure that the terminal device and the network device transceive information with accurate timing. In addition, since uplink reflection is integrated with an uplink synchronization reference signal, spectrum resources may be saved.

Optionally, in the embodiments of the present application, the terminal device may include a terminal based on back scattering communication, such as a zero-power terminal, a semi-active terminal, or the like.

Optionally, in the embodiments of the present application, the network device may include a power supply node and a receiving base station for zero-power communication, and may also include a network device in other communication systems for assisting the terminal in timing correction.

Optionally, the embodiments of the present application support a solution in which the power supply node and the receiving base station are separated or integrated.

For example, the network device may include a single device, which acts both as a power supply node to provide power to the terminal device and as a receiving base station to receive an uplink signal sent by the terminal device.

For example, the network device may also include multiple devices, including a functional node and a receiving base station that are independent of each other. Optionally, in a scenario where the functional node and the receiving base station are separated, coordination link interface(s) are provided between the functional node and the receiving base station.

Optionally, in the embodiments of the present application, the first downlink signal sent by the network device may be used for power supply and information transmission.

For example, the first downlink signal may include a power supply signal and a signal for information transmission. Herein, the signal for information transmission may be specifically used for transmitting downlink information to the terminal device based on service requirements to trigger the terminal device to transmit uplink information by using a back scattering technology, and therefore, this signal may also be called a trigger signal. Alternatively, the first downlink signal may also include a signal used for both power supply and information transmission. In other words, the functional signal and the signal for information transmission sent by the network device may be two signals or a same signal.

Optionally, if the first downlink signal includes the power supply signal and the signal for information transmission, the two signals may be sent at different frequency points or at a same frequency point.

Optionally, the power supply signal may be continuously or intermittently sent by the network device (e.g., a base station or a power supply node) in a downlink frequency band. The power supply signal may be a continuous wave (CW), such as a sine wave.

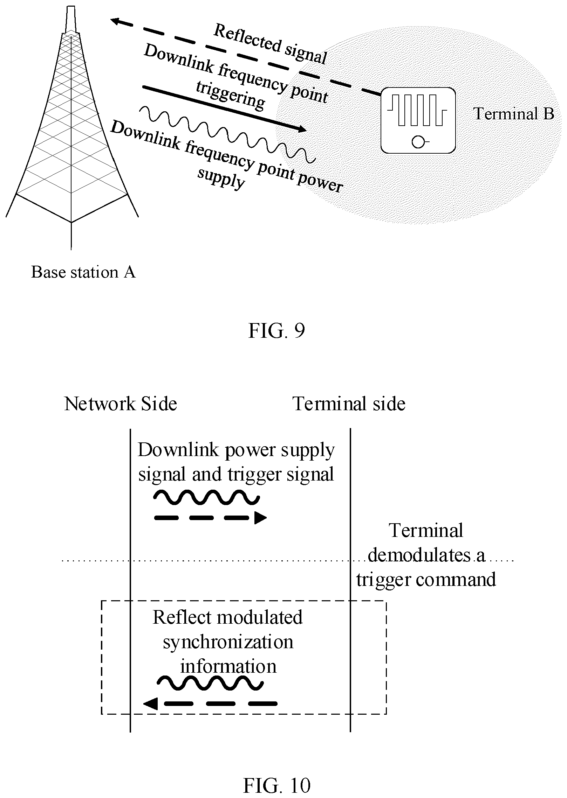

Correspondingly, as shown in FIG. 9, the terminal device receives the first downlink signal, performs power harvesting, and demodulates a trigger signal. After the terminal device obtains power, it may perform corresponding functions, such as signal reception, signal transmission, measurement, or the like. In the embodiments of the present application, the terminal device modulates synchronization information into a reflected signal of the first downlink signal, so that the network device may estimate the timing error and/or frequency error of the terminal device.

Optionally, in the embodiments of the present application, the synchronization information may include a synchronization signal sequence carried in the first uplink signal, which may also be understood as timing, frequency and other information of the terminal device obtained based on the synchronization signal sequence.

Optionally, in S 120, performing, by the terminal device, modulation on the reflected signal of the first downlink signal, includes: performing, by the terminal device, modulation on the reflected signal based on a synchronization signal sequence. That is, the first uplink signal is obtained by performing modulation on the reflected signal based on the synchronization signal sequence.

Optionally, a terminal may use a modulation scheme, such as amplitude modulation (ASK), frequency modulation (FSK), phase modulation (PSK), or the like. That is, the first uplink signal is obtained by modulating the synchronization signal sequence onto the reflected signal based on an amplitude modulation scheme, a frequency modulation scheme or a phase modulation scheme. Specifically, performing, by the terminal device, modulation on the reflected signal based on the synchronization signal sequence, includes: modulating, by the terminal device, the synchronization signal sequence onto the reflected signal based on the amplitude modulation scheme, the frequency modulation scheme or the phase modulation scheme.

Optionally, the synchronization signal sequence may be a sequence with a high time domain autocorrelation characteristic. For example, the synchronization signal sequence may include a pseudo noise (PN) sequence, a discrete Fourier transform (DFT) sequence, or a constant amplitude zero autocorrelation (CAZAC) sequence. Herein, the PN sequence may also be called a pseudo-random (Pseudo-Random) sequence.

Optionally, the PN sequence may include an M sequence or a Gold sequence, etc.

Optionally, other information may also be modulated in the first uplink signal, such as uplink information related to a service or transmission control. That is, performing modulation on the reflected signal to obtain the first uplink signal is further based on uplink information. Specifically, performing, by the terminal device, modulation on the reflected signal of the first downlink signal, further includes: performing, by the terminal device, modulation on the reflected signal based on uplink information.

Optionally, the first uplink signal is obtained by modulating, based on a subcarrier modulation scheme, uplink information onto a reflected signal that has been modulated based on a synchronization signal sequence. That is, the synchronization signal sequence may be modulated onto the reflected signal first, and then the uplink information may be directly modulated onto the synchronization signal sequence. Specifically, performing, by the terminal device, modulation on the reflected signal based on the uplink information, includes: modulating, by the terminal device based on the subcarrier modulation scheme, the uplink information onto the reflected signal that has been modulated based on the synchronization signal sequence.

Optionally, the uplink information and the synchronization information may also be modulated onto the reflected signal in a time division multiplexing manner. That is, the uplink information is multiplexed with the synchronization signal sequence in a time division manner.

Optionally, the uplink information includes at least one of the following information:

uplink data (such as service data);
uplink feedback control information used for indicating whether downlink data in the first downlink signal is successfully received; and
identification information of the terminal device (e.g., terminal ID for identifying the terminal device accessing the network).

Optionally, the first downlink signal and the first uplink signal use a same frequency point.

According to the optional method, it is allowed to use the same uplink and downlink frequency point to solve an uplink and downlink interference problem by means of different transmitting node and receiving node, so that uplink and downlink spectrum resources may be well utilized.

Optionally, the network device may perform timing correction on an uplink signal based on the synchronization information. Specifically, a timing error and/or frequency error of the terminal device obtained based on the synchronization information may be used by the network device to perform timing adjustment and/or frequency adjustment on the first uplink signal. Correspondingly, the method further includes: performing, by the network device, timing adjustment and/or frequency adjustment on the first uplink signal based on the timing error and/or frequency error of the terminal device.

Optionally, the network device may feed back an adjustment command of timing and/or frequency to the terminal device, and the terminal device may perform timing correction by its own based on the adjustment command. That is, the method further includes:

sending, by the network device, a second downlink signal to the terminal device;
where the second downlink signal includes an adjustment command determined based on the timing error and/or frequency error of the terminal device, and the adjustment command is used by the terminal device to perform timing adjustment and/or frequency adjustment on a reflected signal of the second downlink signal to obtain a second uplink signal.

Accordingly, for the terminal device, the method further includes:

receiving, by the terminal device, a second downlink signal from the network device, where the second downlink signal includes an adjustment command determined based on the timing error and/or frequency error of the terminal device;
performing, by the terminal device, modulation on a reflected signal of the second downlink signal, and performing timing adjustment and/or frequency adjustment on the reflected signal based on the adjustment command to obtain a second uplink signal; and
sending, by the terminal device, the second uplink signal to the network device.

Optionally, a process of performing modulation on the reflected signal of the second uplink signal may be implemented with reference to technical details of performing modulation on the reflected signal of the first uplink signal, which will not be described in detail here.

In other words, when a network device sends a downlink signal carrying an adjustment command determined based on the latest obtained timing error and/or frequency error of a terminal, processing of a reflected signal of the downlink signal by the terminal device includes timing correction on the reflected signal and modulation of the reflected signal to carry synchronization information (optionally, also carrying other uplink information), thereby obtaining an uplink signal to be transmitted, which makes the network device to obtain new error information and perform synchronization control on subsequent signals. In this way, closed-loop control of timing error is achieved, which may prevent error diffusion.

Specific configuration and implementation of the embodiments of the present application are described below through two specific example applications.

Example Application 1

As shown in FIG. 10, in this example application, the synchronization control method includes following steps:

receiving, by a terminal device, a power supply signal sent by a network device, and demodulating, by the terminal device, a trigger signal;
reflecting, by the terminal device, modulated synchronization information based on the power supply signal; and
measuring, by the network device, the synchronization information, and correcting, by the network device, timing and frequency errors of the terminal device.

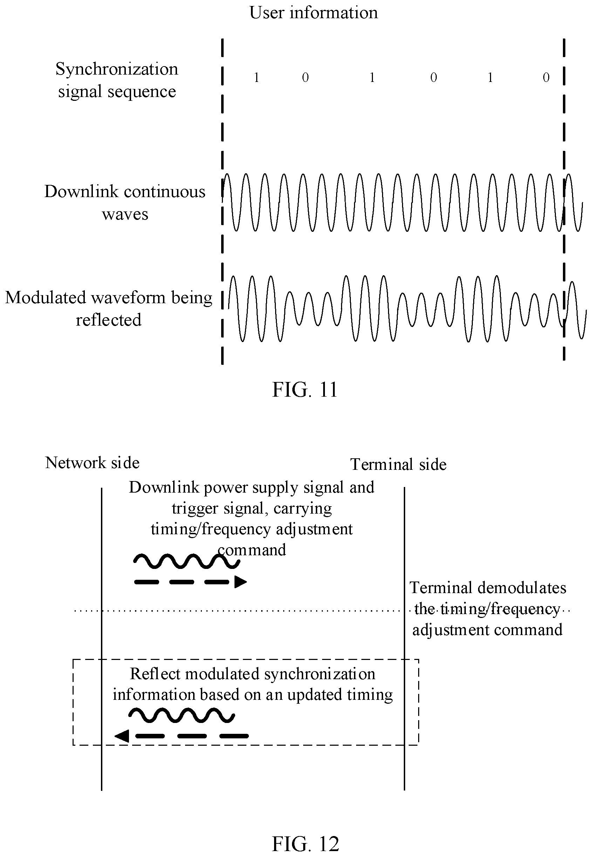

Herein, the terminal device may modulate a synchronization signal sequence onto a reflected signal through amplitude modulation, frequency modulation, phase modulation, etc. FIG. 11 is a schematic diagram showing modulating a synchronization signal sequence onto a reflected signal through amplitude modulation.

Optionally, a synchronization signal sequence to be modulated has a high time domain autocorrelation characteristic, which is, for example, a PN sequence, a DFT sequence or a CAZAC sequence. The PN sequence may be a pseudo-random sequence, such as an M sequence, a Gold sequence, or the like.

Taking the M sequence as an example, a polynomial for generating a specific M sequence is:

$$x(n) = (x(n+7) + x(n+3) + x(n)) \bmod 2 ;$$

where n is a time domain position number, and $x(n)$ is a value corresponding to the time domain position in a synchronization signal sequence. A binary M sequence obtained based on the polynomial may be modulated onto a power supply signal of continuous waves (use of an M sequence polynomial with other parameters is not excluded).

Optionally, other information may also be modulated on the reflected signal of the terminal device. The other information is directly reflected and modulated onto the synchronization signal.

Optionally, a reflected signal of the terminal device may further carry other information. The other information is multiplexed with modulated synchronization signal in a time division manner.

The other information may include:

uplink data of the terminal, for reporting the uplink data;
uplink feedback control of the terminal, for reporting whether downlink data is successfully received; and
a terminal ID reported, for identifying the terminal accessing a network.

Optionally, the terminal device may use the same frequency point in a downlink channel and an uplink reflection channel.

Example Application 2

In this example application, the synchronization control method includes following steps:

receiving, by a terminal device, a power supply signal sent by a network device, and demodulating, by the terminal device, a trigger signal;
reflecting, by the terminal device, modulated synchronization information based on the power supply signal;
measuring, by the network device, the synchronization information, sending, by the network device, a timing/frequency adjustment command, and correcting, by the network device, timing and frequency errors of the terminal device; and
further reflecting, by the terminal, a signal based on the timing/frequency adjustment command.

Optionally, as shown in FIG. 12, the timing/frequency adjustment command may also be modulated on a downlink signal sent by the network device, such as a power supply signal, that is, the timing/frequency adjustment command may be carried by each sent downlink signal to help the terminal device to adjust the timing. The terminal device modulates the synchronization information onto a reflected signal based on an updated timing/frequency adjustment command so as to send an uplink signal. In this way, a closed-loop control is formed to prevent error diffusion.

Optionally, the terminal device may modulate a synchronization signal sequence onto a reflected signal through amplitude modulation, frequency modulation, phase modulation, etc.

Optionally, a synchronization signal sequence to be modulated has a high time domain autocorrelation characteristic, which is, for example, a PN sequence, a DFT sequence or a CAZAC sequence. The PN sequence may be a pseudo-random sequence, such as an M sequence, a Gold sequence, or the like.

Optionally, other information may also be modulated in the signal reflected by the terminal device. The other information is directly reflected and modulated onto the synchronization signal.

Optionally, a signal reflected by the terminal device may further carry other information. The other information is multiplexed with the modulated synchronization signal in a time division manner.

The other information may include:

uplink data of a terminal, for reporting the uplink data;
uplink feedback control of a terminal, for reporting whether downlink data is successfully received; and
a terminal ID reported, for identifying the terminal accessing a network.

Optionally, the terminal device may use the same frequency point in a downlink channel and an uplink reflection channel.

The specific configuration and implementation of the embodiments of the present application are described above from different perspectives through multiple embodiments. By using at least one of the above embodiments, the network device may correct or assist the terminal device in correcting the timing error and/or frequency error, to improve timing accuracy and ensure that the terminal device and the network device transceive information with accurate timing. In addition, since uplink reflection is integrated with an uplink synchronization reference signal, spectrum resources may be saved.

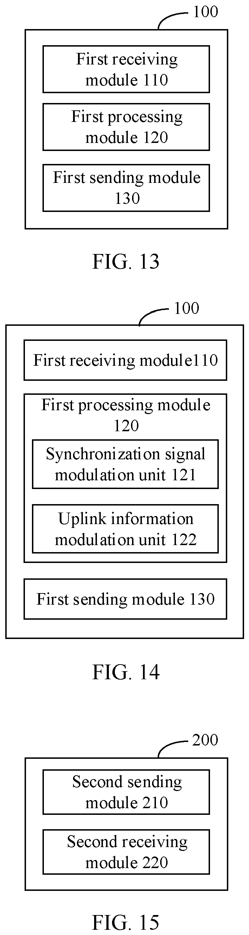

Correspondingly to the processing method of at least one of the above embodiments, the embodiments of the present application further provide a terminal device 100, referring to FIG. 13, which includes:

a first receiving module 110 configured to receive the first downlink signal from the network device;
a first processing module 120 configured to perform modulation on the reflected signal of the first downlink signal to obtain the first uplink signal; and
a first sending module 130 configured to send the first uplink signal to the network device, where the first uplink signal carries the synchronization information through the modulation of the terminal device, and the synchronization information is used for obtaining the timing error and/or frequency error of the terminal device.

Optionally, as shown in FIG. 14, the first processing module 120 may include:
a synchronization signal modulation unit 121 configured to perform modulation on the reflected signal based on the synchronization signal sequence.

Optionally, the synchronization signal modulation unit 121 is further configured to:
modulate the synchronization signal sequence onto the reflected signal based on an amplitude modulation scheme, a frequency modulation scheme or a phase modulation scheme.

Optionally, the synchronization signal sequence includes the PN sequence, the DFT sequence or the CAZAC sequence.

Optionally, the PN sequence includes the M sequence or the Gold sequence.

Optionally, as shown in FIG. 14, the first processing module 120 may include:
an uplink information modulation unit 122 configured to perform modulation on the reflected signal based on the uplink information.

Optionally, the uplink information modulation unit 122 is further configured to:
modulate, based on the subcarrier modulation scheme, the uplink information onto a reflected signal that has been modulated based on the synchronization signal sequence.

Optionally, the uplink information and the synchronization information are modulated onto the reflected signal in a time division multiplexing manner.

Optionally, the uplink information includes at least one of the following information:

uplink data;

uplink feedback control information used for indicating whether the downlink data in the first downlink signal is successfully received; and

identification information of the terminal device.

Optionally, the timing error and/or frequency error of the terminal device is used by the network device to perform timing adjustment and/or frequency adjustment on the first uplink signal.

Optionally, the first receiving module 110 is further configured to: receive the second downlink signal from the network device, where the second downlink signal includes the adjustment command determined based on the timing error and/or frequency error of the terminal device;

the first processing module 120 is further configured to: perform modulation on the reflected signal of the second downlink signal, and perform the timing adjustment and/or frequency adjustment on the reflected signal based on the adjustment command to obtain the second uplink signal; and

the first sending module 130 is further configured to: send the second uplink signal to the network device.

Optionally, the first downlink signal and the first uplink signal use the same frequency point.

The terminal device 100 of the embodiments of the present application can implement corresponding functions of the terminal device in the aforementioned method embodiments. The processes, functions, implementations and effects corresponding to each module (sub-module, unit or component) in the terminal device 100 may be found in the corresponding description in the above method embodiments, and will not be repeated here. It will be noted that the functions described in the various modules (sub-modules, units or components) in the terminal device 100 of the embodiments of the present application may be implemented by different modules (sub-modules, units or components, etc.) or by the same module (sub-module, unit or component). For example, the first sending module and the first receiving module may be different modules or the same module, and both may implement corresponding functions in the embodiments of the present application. In addition, a communication module in the embodiments of the present application may be implemented by a transceiver of a device, and part or all of remaining modules may be implemented by a processor of the device.

FIG. 15 is a schematic block diagram of a network device 200, in accordance with an embodiment of the present application. The network device 200 may include:

a second sending module 210 configured to send the first downlink signal to the terminal device, where the reflected signal of the first downlink signal is used for being modulated to obtain the first uplink signal;

a second receiving module 220 configured to receive the first uplink signal from the terminal device, where the first uplink signal carries the synchronization information through the modulation of the terminal device, and the synchronization information is used for obtaining the timing error and/or frequency error of the terminal device.

Optionally, the first uplink signal is obtained by performing modulation on the reflected signal based on the synchronization signal sequence.

Optionally, the first uplink signal is obtained by modulating the synchronization signal sequence onto the reflected signal based on the amplitude modulation scheme, the frequency modulation scheme or the phase modulation scheme.

Optionally, the synchronization signal sequence includes the PN sequence, the DFT sequence or the CAZAC sequence.

Optionally, the PN sequence includes the M sequence or the Gold sequence.

Optionally, the first uplink signal is obtained by performing modulation on the reflected signal based on the uplink information.

Optionally, the first uplink signal is obtained by modulating, based on the subcarrier modulation scheme, the uplink information onto a reflected signal that has been modulated based on the synchronization signal sequence.

Optionally, the uplink information and the synchronization information are modulated onto the reflected signal in the time division multiplexing manner.

Optionally, the uplink information includes at least one of the following information:

uplink data;

uplink feedback control information used for indicating whether the downlink data in the first downlink signal is successfully received; and

identification information of the terminal device.

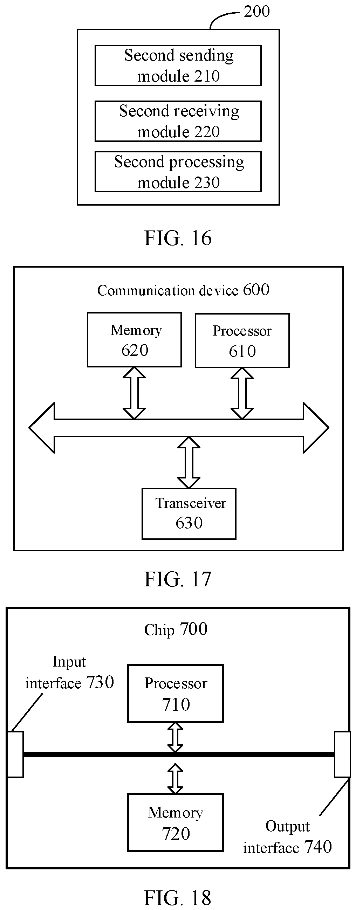

Optionally, as shown in FIG. 16, the network device 200 further includes:

a second processing module 230 configured to perform the timing adjustment and/or frequency adjustment on the first uplink signal based on the timing error and/or frequency error of the terminal device.

Optionally, the second sending module 210 is further configured to: send the second downlink signal to the terminal device;

where the second downlink signal includes the adjustment command determined based on the timing error and/or frequency error of the terminal device, and the adjustment command is used by the terminal device to perform the timing adjustment and/or frequency adjustment on the reflected signal of the second downlink signal to obtain the second uplink signal.

Optionally, the first downlink signal and the first uplink signal use the same frequency point.

The network device 200 of the embodiments of the present application can implement corresponding functions of the network device in the aforementioned method embodiments. The processes, functions, implementations and effects corresponding to each module (sub-module, unit or component) in the network device 200 may be found in the corresponding description in the above method embodiments, and will not be repeated here. It will be noted that the functions described in the various modules (sub-modules, units or components) in the network device 200 of the embodiments of the present application may be implemented by different modules (sub-modules, units or components) or by the same module (sub-module, unit or component), both may implement corresponding functions in the embodiments of the present application. In addition, a communication module in the embodiments of the present application may be implemented by a transceiver of a device, and part or all of remaining modules may be implemented by a processor of the device.

FIG. 17 is a schematic structural diagram of a communication device 600, in accordance with the embodiments of the present application. The communication device 600 includes a processor 610, and the processor 610 may call and run a computer program from a memory to implement the methods in the embodiments of the present application.

Optionally, the communication device 600 may further include a memory 620. The processor 610 may call and run the computer program from the memory 620 to implement the methods in the embodiments of the present application.

The memory 620 may be a separate device independent of the processor 610, or may be integrated into the processor 610.

Optionally, the communication device 600 may further include a transceiver 630, and the processor 610 may control the transceiver 630 to communicate with other devices, and specifically, may control the transceiver 630 send information or data to other devices, or receive information or data sent by other devices.

The transceiver 630 may include a transmitter and a receiver. The transceiver 630 may further include antenna(s). There may be one or more antennas.

Optionally, the communication device 600 may be a network device of the embodiments of the present application, and the communication device 600 may implement the corresponding processes implemented by the network device in each method of the embodiments of the present application, which will not be repeated here for the sake of brevity.

Optionally, the communication device 600 may be a terminal device of the embodiments of the present application, and the communication device 600 may implement the corresponding processes implemented by the terminal device in each method of the embodiments of the present application, which will not be repeated here for the sake of brevity.

FIG. 18 is a schematic structural diagram of a chip 700, in accordance with embodiments of the present application. The chip 700 includes a processor 710, and the processor 710 may call and run a computer program from a memory to implement the methods in the embodiments of the present application.

Optionally, the chip further includes a memory 720. The processor 710 may call and run the computer program from the memory 720 to implement the methods in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may control the input interface 730 to obtain information or data sent by other devices or chips.

Optionally, the chip 700 may further include an output interface 740. The processor 710 may control the output interface 740 to communicate with other devices or chips, and specifically, may control the output interface 740 to output information or data to other devices or chips.

Optionally, the chip may be applied to the network device in the embodiments of the present application, and the chip may implement the corresponding processes implemented by the network device in each method of the embodiments of the present application, which will not be repeated here for the sake of brevity.

Optionally, the chip may be applied to the terminal device in the embodiments of the present application, and the chip may implement the corresponding processes implemented by the terminal device in each method of the embodiments of the present application, which will not be repeated here for the sake of brevity.

It should be understood that the chip mentioned in the embodiments of the present application may also be referred to as a system-level chip, a system chip, a chip system, a system-on-chip, or the like.

The processor mentioned above may be a general-purpose processor, a digital signal processor (DSP), a field programmable gate array (FPGA), an application specific integrated circuit (ASIC), other programmable logic devices, a transistor logic device, a discrete hardware component, or the like. The general purpose processor mentioned above may be a microprocessor or any conventional processor, or the like.

The memory mentioned above may be a volatile memory or a non-volatile memory, or may include both volatile and non-volatile memories. Here, the non-volatile memory may be a read-only memory (ROM), a programmable ROM (PROM), an erasable programmable read-only memory (erasable PROM, EPROM), an electrically erasable programmable read-only memory (electrically EPROM, EEPROM), or a flash memory. The volatile memory may be a random access memory (RAM).

It should be understood that the above-mentioned memory is exemplary but not restrictive. For example, the memory in the embodiments of the present application may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous link dynamic random access memory (synch link DRAM, SLDRAM), direct memory bus random access memory (Direct Rambus RAM, DR RAM), or the like. That is, the memory in the embodiments of the present application is intended to include but is not limited to these and any other suitable types of memory.

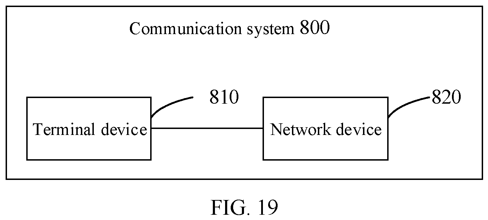

FIG. 19 is a schematic block diagram of a communication system 800, in accordance with embodiments of the present application. The communication system 800 includes a terminal device 810 and a network device 820.

Here, the terminal device 810 can be used to implement the corresponding functions implemented by the terminal device in the method of each embodiment of the present application, and the network device 820 can be used to implement the corresponding functions implemented by the network device in the method of each embodiment of the present application, which will not be repeated here for the sake of brevity.

The above embodiments may be implemented in whole or in part through software, hardware, firmware, or any combination thereof. When the embodiments are implemented by using a software program, the software program may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, wireless or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

In the description of the specification, the term such as "an embodiment", "some embodiments", "example", "specific example" or "some examples" is intended to indicate that specific features, structures, materials or characteristics related to the embodiment(s) or example(s) are included in at least one embodiment or example of the present invention. And, the specific features, structures, materials or characteristics can be combined in any one or more embodiments or examples in any suitable way. In addition, those skilled in the art can combine and associate different embodiments or examples and features of different embodiments or examples described in this specification without mutual contradiction.

Furthermore, terms such as "first" and "second" are only used for descriptive purposes, and are not to be understood as indicating or implying the relative importance or implicitly indicating the number of indicated technical features. Thus, features defined by "first" or "second" may explicitly or implicitly include one or more of the features. In the description of the embodiments of the present invention, term "a plurality of" or "multiple" means two or more unless otherwise specified.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

**Claims**

1. A synchronization control method, comprising:

   receiving, by a terminal device, a first downlink signal from a network device;
   performing, by the terminal device, modulation on a reflected signal of the first downlink signal to obtain a first uplink signal; and
   sending, by the terminal device, the first uplink signal to the network device, wherein the first uplink signal carries synchronization information through the modulation of the terminal device, and the synchronization information is used for obtaining a timing error and/or frequency error of the terminal device.

2. The method of claim 1, wherein performing, by the terminal device, modulation on the reflected signal of the first downlink signal, comprises:
   performing, by the terminal device, modulation on the reflected signal based on a synchronization signal sequence.

3. The method of claim 2, wherein performing, by the terminal device, modulation on the reflected signal based on the synchronization signal sequence, comprises:
   modulating, by the terminal device, the synchronization signal sequence onto the reflected signal based on an amplitude modulation scheme, a frequency modulation scheme or a phase modulation scheme.

4. The method of claim 2 or 3, wherein the synchronization signal sequence comprises a pseudo noise (PN) sequence, a discrete Fourier transform (DFT) sequence or a constant amplitude zero autocorrelation (CAZAC) sequence.

5. The method of claim 4, wherein the PN sequence comprises an M sequence or a Gold sequence.

6. The method of any one of claims 1 to 5, wherein performing, by the terminal device, modulation on the reflected signal of the first downlink signal, comprises:
   performing, by the terminal device, modulation on the reflected signal based on uplink information.

7. The method of claim 6, wherein performing, by the terminal device, modulation on the reflected signal based on the uplink information, comprises:
   modulating, by the terminal device based on a subcarrier modulation scheme, the uplink information onto a reflected signal that has been modulated based on a synchronization signal sequence.

8. The method of claim 6, wherein the uplink information and the synchronization information are modulated onto the reflected signal in a time division multiplexing manner.

9. The method of any one of claims 6 to 8, wherein the uplink information comprises at least one of:

   uplink data;
   uplink feedback control information used for indicating whether downlink data in the first downlink signal is successfully received; and
   identification information of the terminal device.

10. The method of any one of claims 1 to 9, wherein the timing error and/or frequency error of the terminal device is used by the network device to perform timing adjustment and/or frequency adjustment on the first uplink signal.

11. The method of any one of claims 1 to 9, further comprising:

    receiving, by the terminal device, a second downlink signal from the network device, wherein the second downlink signal comprises an adjustment command determined based on the timing error and/or frequency error of the terminal device;

performing, by the terminal device, modulation on a reflected signal of the second downlink signal;

performing, by the terminal device, timing adjustment and/or frequency adjustment on the reflected signal based on the adjustment command to obtain a second uplink signal; and

sending, by the terminal device, the second uplink signal to the network device.

12. The method of any one of claims 1 to 11, wherein the first downlink signal and the first uplink signal use a same frequency point.

13. A synchronization control method, comprising:

sending, by a network device, a first downlink signal to a terminal device, wherein a reflected signal of the first downlink signal is used for being modulated to obtain a first uplink signal;

receiving, by the network device, the first uplink signal from the terminal device, wherein the first uplink signal carries synchronization information through modulation by the terminal device, and the synchronization information is used for obtaining a timing error and/or frequency error of the terminal device.

14. The method of claim 13, wherein the first uplink signal is obtained by performing modulation on the reflected signal based on a synchronization signal sequence.

15. The method of claim 14, wherein the first uplink signal is obtained by modulating the synchronization signal sequence onto the reflected signal based on an amplitude modulation scheme, a frequency modulation scheme or a phase modulation scheme.

16. The method of claim 14 or 15, wherein the synchronization signal sequence comprises a PN sequence, a DFT sequence or a CAZAC sequence.

17. The method of claim 16, wherein the PN sequence comprises an M sequence or a Gold sequence.

18. The method of any one of claims 13 to 17, wherein the first uplink signal is obtained by performing modulation on the reflected signal based on uplink information.

19. The method of claim 18, wherein the first uplink signal is obtained by modulating, based on a subcarrier modulation scheme, the uplink information onto a reflected signal that has been modulated based on a synchronization signal sequence.

20. The method of claim 18, wherein the uplink information and the synchronization information are modulated onto the reflected signal in a time division multiplexing manner.

21. The method of any one of claims 18 to 20, wherein the uplink information comprises at least one of:

uplink data;

uplink feedback control information used for indicating whether downlink data in the first downlink signal is successfully received; and

identification information of the terminal device.

22. The method of any one of claims 13 to 21, further comprising:
performing, by the network device, timing adjustment and/or frequency adjustment on the first uplink signal based on the timing error and/or frequency error of the terminal device.

23. The method of any one of claims 13 to 21, further comprising:

sending, by the network device, a second downlink signal to the terminal device, wherein

the second downlink signal comprises an adjustment command determined based on the timing error and/or frequency error of the terminal device, and the adjustment command is used by the terminal device to perform timing adjustment and/or frequency adjustment on a reflected signal of the second downlink signal to obtain a second uplink signal.

24. The method of any one of claims 13 to 23, wherein the first downlink signal and the first uplink signal use a same frequency point.

25. A terminal device, comprising:

a first receiving module configured to receive a first downlink signal from a network device;
a first processing module configured to perform modulation on a reflected signal of the first downlink signal to obtain a first uplink signal; and
a first sending module configured to send the first uplink signal to the network device, wherein the first uplink signal carries synchronization information through the modulation of the terminal device, and the synchronization information is used for obtaining a timing error and/or frequency error of the terminal device.

26. The terminal device of claim 25, wherein the first processing module includes:
a synchronization signal modulation unit configured to perform modulation on the reflected signal based on a synchronization signal sequence.

27. The terminal device of claim 26, wherein the synchronization signal modulation unit is further configured to:
modulate the synchronization signal sequence onto the reflected signal based on an amplitude modulation scheme, a frequency modulation scheme or a phase modulation scheme.

28. The terminal device of claim 26 or 27, wherein the synchronization signal sequence comprises a PN sequence, a DFT sequence or a CAZAC sequence.

29. The terminal device of claim 28, wherein the PN sequence comprises an M sequence or a Gold sequence.

30. The terminal device of any one of claims 25 to 29, wherein the first processing module comprises:
an uplink information modulation unit configured to perform modulation on the reflected signal based on uplink information.

31. The terminal device of claim 30, wherein the uplink information modulation unit is further configured to:
modulate, based on a subcarrier modulation scheme, the uplink information onto a reflected signal that has been modulated based on a synchronization signal sequence.

32. The terminal device of claim 30, wherein the uplink information and the synchronization information are modulated onto the reflected signal in a time division multiplexing manner.

33. The terminal device of any one of claims 30 to 32, wherein the uplink information comprises at least one of:

uplink data;
uplink feedback control information used for indicating whether downlink data in the first downlink signal is successfully received; and
identification information of the terminal device.

34. The terminal device of any one of claims 25 to 33, wherein the timing error and/or frequency error of the terminal device is used by the network device to perform timing adjustment and/or frequency adjustment on the first uplink signal.

35. The terminal device of any one of claims 25 to 33, wherein

the first receiving module is further configured to: receive a second downlink signal from the network device, wherein the second downlink signal comprises an adjustment command determined based on the timing error and/or frequency error of the terminal device;
the first processing module is further configured to: perform modulation on a reflected signal of the second downlink signal, and perform timing adjustment and/or frequency adjustment on the reflected signal based on the adjustment command to obtain a second uplink signal; and
the first sending module is further configured to: send the second uplink signal to the network device.

36. The terminal device of any one of claims 25 to 35, wherein the first downlink signal and the first uplink signal use a same frequency point.

**37.** A network device, comprising:

a second sending module configured to send a first downlink signal to a terminal device, wherein a reflected signal of the first downlink signal is used for being modulated to obtain a first uplink signal; and
a second receiving module configured to receive the first uplink signal from the terminal device, wherein the first uplink signal carries synchronization information through the modulation of the terminal device, and the synchronization information is used for obtaining a timing error and/or frequency error of the terminal device.

**38.** The network device of claim 37, wherein the first uplink signal is obtained by performing modulation on the reflected signal based on a synchronization signal sequence.

**39.** The network device of claim 38, wherein the first uplink signal is obtained by modulating the synchronization signal sequence onto the reflected signal based on an amplitude modulation scheme, a frequency modulation scheme or a phase modulation scheme.

**40.** The network device of claim 38 or 39, wherein the synchronization signal sequence comprises a PN sequence, a DFT sequence or a CAZAC sequence.

**41.** The network device of claim 40, wherein the PN sequence comprises an M sequence or a Gold sequence.

**42.** The network device of any one of claims 37 to 41, wherein the first uplink signal is obtained by performing modulation on the reflected signal based on uplink information.

**43.** The network device of claim 42, wherein the first uplink signal is obtained by modulating, based on a subcarrier modulation scheme, the uplink information onto a reflected signal that has been modulated based on a synchronization signal sequence.

**44.** The network device of claim 42, wherein the uplink information and the synchronization information are modulated onto the reflected signal in a time division multiplexing manner.

**45.** The network device of any one of claims 42 to 44, wherein the uplink information comprises at least one of:

uplink data;
uplink feedback control information used for indicating whether downlink data in the first downlink signal is successfully received; and
identification information of the terminal device.

**46.** The network device of any one of claims 37 to 45, further comprising:
a second processing module configured to perform timing adjustment and/or frequency adjustment on the first uplink signal based on the timing error and/or frequency error of the terminal device.

**47.** The network device of any one of claims 37 to 45, wherein the second sending module is further configured to: send a second downlink signal to the terminal device, wherein
the second downlink signal comprises an adjustment command determined based on the timing error and/or frequency error of the terminal device, and the adjustment command is used by the terminal device to perform timing adjustment and/or frequency adjustment on a reflected signal of the second downlink signal to obtain a second uplink signal.

**48.** The network device of any one of claims 37 to 47, wherein the first downlink signal and the first uplink signal use a same frequency point.

**49.** A terminal device, comprising a processor and a memory, wherein the memory is configured to store a computer program, and the processor is configured to call and run the computer program stored in the memory to implement the steps of the method of any one of claims 1 to 12.

**50.** A network device, comprising a processor and a memory, wherein the memory is configured to store a computer program, and the processor is configured to call and run the computer program stored in the memory to implement the steps of the method of any one of claims 13 to 24.

**51.** A chip, comprising:
a processor configured to call and run a computer program from a memory to cause a device equipped with the chip to perform the steps of the method of any one of claims 1 to 24.

**52.** A computer-readable storage medium, configured to store a computer program, wherein
the computer program causes a computer to perform the steps of the method of any one of claims 1 to 24.

**53.** A computer program product, comprising computer program instructions, wherein
the computer program instructions cause a computer to perform the steps of the method of any one of claims 1 to 24.

**54.** A computer program, wherein the computer program causes a computer to perform the steps of the method of any one of claims 1 to 24.

**55.** A communication system, comprising:

a terminal device configured to perform the method of any one of claims 1 to 12; and
a network device configured to perform the method of any one of claims 13 to 24.

**1000**

1100

1200

1200

FIG. 1

Charging/
triggering

Power
harvesting
module

Back
scattering
module

Low-
power
computing
module

Sensor
module

Reader-writer

Scattering
communication

TAG

FIG. 2

Back scattering
reader-writer

TX

AMP

Carrier

Back scattering
tag

Logic
processing

Power
harvesting

RX

LNA

Reflected signal

FIG. 3

FIG. 4

FIG. 5

FIG. 6A

FIG. 6B

S110

Receive, by a terminal device, a first downlink signal from a network device

S120

Perform, by the terminal device, modulation on a reflected signal of the first downlink signal to obtain a first uplink signal; and sending, by the terminal device, the first uplink signal to the network device, where the first uplink signal carries synchronization information through the modulation of the terminal device, and the synchronization information is used for obtaining a timing error and/or frequency error of the terminal device

FIG. 7

S110

Send, by a network device, a first downlink signal to a terminal device, where a reflected signal of the first downlink signal is used for being modulated to obtain a first uplink signal

S120

Receive, by the network device, the first uplink signal from the terminal device, where the first uplink signal carries synchronization information through the modulation of the terminal device, and the synchronization information is used for obtaining a timing error and/or frequency error of the terminal device

FIG. 8

Reflected signal

Downlink frequency point triggering

Downlink frequency point power supply

Terminal B

Base station A

FIG. 9

Network Side                    Terminal side

Downlink power supply
signal and trigger signal

Terminal
demodulates a
trigger command

Reflect modulated
synchronization
information

FIG. 10

User information

Synchronization signal sequence

1    0    1    0    1    0

Downlink continuous waves

Modulated waveform being reflected

FIG. 11

Network side                              Terminal side

Downlink power supply signal and trigger signal, carrying timing/frequency adjustment command

Terminal demodulates the timing/frequency adjustment command

Reflect modulated synchronization information based on an updated timing

FIG. 12

100

First receiving
module 110

First processing
module 120

First sending module
130

FIG. 13

100

First receiving module110

First processing module
120

Synchronization signal
modulation unit 121

Uplink information
modulation unit 122

First sending module 130

FIG. 14

200

Second sending
module 210

Second receiving
module 220

FIG. 15

200

Second sending
module 210

Second receiving
module 220

Second processing
module 230

FIG. 16

Communication device 600

Memory
620

Processor
610

Transceiver
630

FIG. 17

Chip 700

Input
interface 730

Processor
710

Memory
720

Output
interface 740

FIG. 18

Communication system 800

810

Terminal device

820

Network device

FIG. 19

## INTERNATIONAL SEARCH REPORT

| International application No. |
|---|
| **PCT/CN2022/073276** |

| A. CLASSIFICATION OF SUBJECT MATTER |
|---|
| H04L 7/04(2006.01)i;  H04L 7/00(2006.01)i;  H04B 10/071(2013.01)i |
| According to International Patent Classification (IPC) or to both national classification and IPC |

| B. FIELDS SEARCHED |
|---|
| Minimum documentation searched (classification system followed by classification symbols) |
| H04L; H04B; H04W |
| Documentation searched other than minimum documentation to the extent that such documents are included in the fields searched |
| |
| Electronic data base consulted during the international search (name of data base and, where practicable, search terms used) |
| CNPAT, CNKI, WPI, EPODOC, 3GPP, IEEE: 同步, 反射, 下行, 上行, 调制, 定时, 误差, 频率, 偏差, 频偏, 时偏, 偏移, 网络, synchron+, reflect+, downlink, uplink, modulat+, timing, error, frequency, offset, time, network |

| C. DOCUMENTS CONSIDERED TO BE RELEVANT |
|---|

| Category* | Citation of document, with indication, where appropriate, of the relevant passages | Relevant to claim No. |
|---|---|---|
| Y | CN 113810069 A (HUAWEI TECHNOLOGIES CO., LTD.) 17 December 2021 (2021-12-17) description, paragraphs [0146]-[0213] and [0233]-[0261] | 1-55 |
| Y | CN 112118086 A (CHENGDU HUAWEI TECHNOLOGIES CO., LTD.) 22 December 2020 (2020-12-22) description, paragraphs [0098]-[0112] | 1-55 |
| Y | CN 112104413 A (SHANGHAI HUAWEI TECHNOLOGIES CO., LTD.) 18 December 2020 (2020-12-18) description, paragraphs [0028]-[0094] | 1-55 |
| A | WO 2021169586 A1 (HUAWEI TECHNOLOGIES CO., LTD.) 02 September 2021 (2021-09-02) entire document | 1-55 |
| A | US 2018032768 A1 (UNIVERSITY OF MASSACHUSETTS) 01 February 2018 (2018-02-01) entire document | 1-55 |

☑ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 July 2022** | **02 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/073276** |

**C.    DOCUMENTS CONSIDERED TO BE RELEVANT**

| Category* | Citation of document, with indication, where appropriate, of the relevant passages | Relevant to claim No. |
|---|---|---|
| A | JIN, Mitsugi et al. "Perfectly Synchronized Streaming from Multiple Digitally Modulated Backscatter Sensor Tags"<br>*IEEE JOURNAL OF RADIO FREQUENCY IDENTIFICATION,*<br>Vol. 3, No. 3, 01 May 2019 (2019-05-01),<br>   entire document | 1-55 |

Form PCT/ISA/210 (second sheet) (January 2015)

| INTERNATIONAL SEARCH REPORT<br>Information on patent family members | | | | International application No.<br>**PCT/CN2022/073276** | | | |
|---|---|---|---|---|---|---|---|
| Patent document<br>cited in search report | | | Publication date<br>(day/month/year) | Patent family member(s) | | | Publication date<br>(day/month/year) |
| CN | 113810069 | A | 17 December 2021 | WO | 2021254183 | A1 | 23 December 2021 |
| CN | 112118086 | A | 22 December 2020 | WO | 2020253660 | A1 | 24 December 2020 |
| CN | 112104413 | A | 18 December 2020 | WO | 2020253667 | A1 | 24 December 2020 |
|  |  |  |  | EP | 3968546 | A1 | 16 March 2022 |
|  |  |  |  | US | 2022109499 | A1 | 07 April 2022 |
| WO | 2021169586 | A1 | 02 September 2021 | CN | 113315729 | A | 27 August 2021 |
| US | 2018032768 | A1 | 01 February 2018 | None | | | |

Form PCT/ISA/210 (patent family annex) (January 2015)